# EUROPÄISCHE PATENTSCHRIFT

(11) **EP 2 071 131 B1**
(45) Veröffentlichungstag und Bekanntmachung des Hinweises auf die Patenterteilung: **29.08.2012**
(21) Anmeldenummer: 08169541.3
(22) Anmeldetag: 20.11.2008
(51) Int. Cl.: F01D 11/04, F01D 25/18, F16J 15/42

(54) **Abdichtung mindestens einer Welle mit mindestens einer hydraulischen Dichtung**
Seal for at least one shaft with at least one hydraulic seal
Etanchéification d'au moins un arbre à l'aide d'au moins un joint hydraulique

(30) Priorität: 14.12.2007 DE 102007060890
(43) Veröffentlichungstag der Anmeldung: 17.06.2009
(73) Patentinhaber: Rolls-Royce Deutschland Ltd & Co KG, 15827 Blankenfelde-Mahlow (DE)
(72) Erfinder: Gäbler, Miklos, 14480 Potsdam (DE); Hein, Stefan, 12305 Berlin (DE)
(74) Vertreter: Gross, Felix

(56) Entgegenhaltungen:
- EP-A1- 1 531 295
- EP-A2- 0 931 962
- EP-B1- 1 045 178
- DE-A1-102004 040 242
- DE-A1-102005 047 696
- FR-A1- 2 548 752
- FR-A1- 2 621 970

## Beschreibung

Die Erfindung betrifft eine Vorrichtung zum Abdichten mindestens einer in einem Gehäuse angeordneten Welle mit mindestens einer hydraulischen Dichtung. Weiterhin betrifft die Erfindung die Verwendung der Vorrichtung in einem Luft- oder Raumfahrt-Strahltriebwerk oder in chemischen oder prozesstechnischen Anlagen.

In der Technik ist eine Vielzahl von unterschiedlichen statischen und dynamischen Dichtungen bekannt, wobei innerhalb der dynamischen Dichtungen zwischen Berührungsdichtungen und berührungslosen Dichtungen unterschieden wird. Dichtungen an Wellen spielen eine besonders wichtige Rolle. Die bekanntesten und am häufigsten eingesetzten Berührungsdichtungen an Wellen sind Stopfbuchsen, Wellendichtringe, Bürstendichtungen und Kolbenringe. Als berührungslose Wellendichtungen werden insbesondere Spaltdichtungen, Labyrinthdichtungen oder Fliehkraftdichtungen verwendet. Bei Fliehkraftdichtungen wird ein hydraulisches Dichtmedium, insbesondere Öl, durch Fliehkraft in Rotation versetzt, so dass es einen ringförmigen Spalt ausfüllt und abdichtet. Daher werden Fliehkraftdichtungen oft auch als hydraulische Dichtungen bezeichnet.

Besonders bei Strahltriebwerken mit mehreren Wellen tritt das Problem auf, dass Wellen gegeneinander abgedichtet werden müssen, um Hoch- und Niederdruckbereiche von einander zu trennen. Bisher sind für diesen Anwendungsbereich hydraulische Dichtungen bekannt, deren Komponenten zusammen mit den Wellen oder in dem Dichtmedium zwischen den Wellen mitrotieren.

In EP 1 045 178 B1 und DE 10 2004 040 242 A1 ist jeweils eine hydraulische Dichtung in einem Strahltriebwerk beschrieben, die zur Abdichtung von Hoch- und Niederdruckbereichen an ineinander greifenden rotierenden Wellen dient. Beide hydraulischen Dichtungen werden im Wesentlichen von einem Hohlraum in der radial äußeren Welle und einem Dichtelement an der radial inneren Welle gebildet. Der Hohlraum und das Dichtelement rotieren also jeweils mit der zugehörigen Welle mit.

Die auf das Dichtmedium wirkende Fliehkraft erzeugt eine Rotationsströmung in dem Dichtmedium. Durch die unterschiedlichen Geschwindigkeiten des Hohlraums und des Dichtelements entstehen Verwirbelungs- und Reibungsverluste in dem Dichtmedium, so dass eine Erhitzung des Dichtmediums auftritt, die zu einer Verkokung führt. Außerdem sind die beiden Anordnungen nicht für gegenläufig rotierende Wellen geeignet.

In der DE 10 2005 047 696 A1 ist eine hydraulische Dichtung in einem Strahltriebwerk beschrieben, die dazu geeignet ist, gegenläufige Wellen gegeneinander abzudichten. Dazu ist zwischen zwei ineinandergreifenden Wellen ein rippenförmiger, radialer Sperrsteg angeordnet. Dieser Sperrsteg ist zwischen den Wellen schwimmend gelagert. Der Sperrsteg ist jedoch gegenüber der radial inneren Welle nur über einen Luftspalt abgedichtet, so dass es an dieser Stelle zu Leckagen kommt.

Die FR 2 621 970 weist eine Vorrichtung mit einer hydraulischen Dichtung mit den Merkmalen der Präamble des Anspruchs 1 auf.

Der vorliegenden Erfindung liegt daher die Aufgabe zu Grunde, eine hydraulische Wellenabdichtung bereit zu stellen, bei der die Verwirbelungs- und Reibungsverluste in dem Dichtmedium gering sind und bei der keine Leckage auftritt.

Diese Aufgabe wird erfindungsgemäß mit einer Vorrichtung zum Abdichten mindestens einer in einem Gehäuse angeordneten Welle mit den Merkmalen des Anspruchs 1 gelöst. Weiterhin wird die Aufgabe durch eine Verwendung der Vorrichtung nach Anspruch 20 gelöst. Vorteilhafte Weiterbildungen der Erfindung sind in den Unteransprüchen enthalten.

Erfindungsgemäß besteht die Lösung der Aufgabe in einer Vorrichtung zum Abdichten mindestens einer in einem Gehäuse angeordneten Welle mit mindestens einer hydraulischen Dichtung. Die hydraulische Dichtung umfasst mindestens einen im Wesentlichen ringförmigen, radial nach innen offenen Hohlraum und mindestens ein im Wesentlichen ringförmiges, radial nach außen gerichtetes Dichtelement, das in den Hohlraum hineinragt. Die hydraulische Dichtung ist an der Innenseite oder an der Außenseite der Welle angeordnet, und der Hohlraum oder das Dichtelement der hydraulischen Dichtung ist mit einer Wand des Gehäuses verbunden.

Die Wand trennt mindestens zwei Wellen voneinander, wobei eine erste hydraulische Dichtung an der ersten Welle und eine zweite hydraulische Dichtung an der zweiten Welle angeordnet sind.

Die erste Welle und die zweite Welle sind gegenläufig rotierende Wellen.

Der Einsatz von je einer hydraulischen Dichtung an der ersten und der zweiten Welle ermöglicht die Abdichtung gegenrotierender Wellen mittels zweier hydraulischer Dichtungen.

Die erste hydraulische Dichtung und die zweite hydraulische Dichtung weisen auf den von der Wand abgewandten Seiten jeweils eine Stillstandsdichtung auf. Auch hier dienen die Stillstandsdichtungen dazu, ein Auslaufen des Öls im Stillstand zu verhindern.

Die erfindungsgemäße Vorrichtung bietet den Vorteil, dass jede der Wellen gegen ein nicht mitrotierendes Teil, d.h. einen Hohlraum oder ein Dichtelement abgedichtet wird.

Die Bauform stellt eine einfache Ausführungsform einer hydraulischen Dichtung dar, die zudem eine optimale Abdichtung im Betrieb ermöglicht. Die alternative Anordnung der hydraulischen Dichtung an der Innenseite oder an der Außenseite der Welle ermöglicht eine Variation der Anordnung der hydraulischen Dichtung je nach Bedarf.

Außerdem ermöglicht die erfindungsgemäße Vorrichtung eine Einsparung des Dichtmediums, einen verschleißfreien Lauf und eine Entlastung des Ventilsystems der Lagerkammer. Die Vorrichtung ist leckagefrei und widersteht auch größeren Druckdifferenzen.

Insbesondere weist die hydraulische Dichtung auf der von der Wand abgewandten Seite eine Stillstandsabdichtung auf. Die Stillstandsdichtung verhindert ein Auslaufen des Dichtmediums an der Welle bei einem Stillstand.

In einer Ausführungsform sind der Hohlraum der ersten hydraulischen Dichtung mitrotierend an der Innenseite der Welle vorgesehen und das Dichtelement mit der Wand verbunden.

Bei dieser Ausführungsform umfasst die Stillstandsdichtung eine Ringscheibe, die mit der Innenseite der Welle verbunden ist und weist eine radial nach innen gerichtete Nut auf, in die ein Kolbenring eingesetzt ist, der an eine ringförmige Verlängerung des Dichtelements angrenzt. Der Kolbenring verhindert ein Auslaufen des Dichtmediums aus der hydraulischen Dichtung bei einem Stillstand der Welle.

In einer alternativen Ausführungsform sind der Hohlraum der hydraulischen Dichtung in der Wand vorgesehen und das Dichtelement mitrotierend an der Außenseite der Welle angeordnet. Bei dieser Ausführungsform ist das Gewicht der Wand besonders gering, da der Innendurchmesser der Wand bzw. des Hohlraums größer ist als bei der ersten Ausführungsform.

Bei dieser Ausführungsform umfasst die Stillstandsdichtung eine Ringscheibe, die mit der Wand verbunden ist und eine radial nach innen gerichtete Nut aufweist, in die ein Kolbenring eingesetzt ist, der an die Welle angrenzt. Der Kolbenring verhindert, wie bei der ersten Ausführungsform, ein Auslaufen des Dichtmediums an der Welle bei einem Stillstand.

Bei beiden Ausführungsformen kann die hydraulische Dichtung mit einer Kühleinrichtung versehen sein. Die Kühleinrichtung kann z.B. eine aktive Durchspülung der hydraulischen Dichtung bewirken und einen Einsatz der hydraulischen Dichtung im Hochtemperaturbereich ermöglichen.

Vorzugsweise ist der Hohlraum der hydraulischen Dichtung über mindestens einen Kanal mit einer Abflussleitung und/oder einem Raum zwischen der Welle und dem Gehäuse verbunden. Auf diese Weise kann das Dichtmedium aus der hydraulischen Dichtung abgeleitet werden, damit es nicht zu lange in der hydraulischen Dichtung bleibt und die Eigenschaften des Dichtmediums im Laufe der Zeit nicht durch Wärme und Reibung beeinträchtigt werden (Verkokung).

In noch einer weiteren Ausführungsform ist die zweite hydraulische Dichtung im Innern der ersten hydraulischen Dichtung angeordnet. Durch diese Anordnung wird die zweite hydraulische Dichtung in die erste hydraulische Dichtung integriert, wodurch eine kompakte Bauweise der Vorrichtung erreicht wird.

Bei dieser Ausführungsform umfasst die zweite hydraulische Dichtung einen im Wesentlichen ringförmigen Hohlraum im Dichtelement der ersten hydraulischen Dichtung und ein im Wesentlichen ringförmiges Dichtelement der zweiten hydraulischen Dichtung, das in den Hohlraum im Dichtelement der ersten hydraulischen Dichtung hineinragt. Trotz der Integration der zweiten hydraulischen Dichtung in die erste hydraulische Dichtung ist eine getrennte Abdichtung der beiden Wellen gewährleistet. Außerdem werden Gewicht und Bauraum der Vorrichtung gering gehalten.

Vorzugsweise sind das Dichtelement der ersten hydraulischen Dichtung mit der Wand und das Dichtelement der zweiten hydraulischen Dichtung mit der zweiten Welle verbunden. Dadurch wird verhindert, dass ein Dichtelement von zwei gegenläufigen Wellen bewegt wird, wie es z.B. in der DE 10 2005 047 696 A1 beschrieben ist, und somit Verluste verursacht.

Ferner ist bei der vierten Ausführungsform ein zweiter Kanal im Dichtelement der ersten hydraulischen Dichtung angeordnet, der den Hohlraum der zweiten hydraulischen Dichtung mit dem Hohlraum der ersten hydraulischen Dichtung verbindet. Durch den zweiten Kanal kann das Dichtmedium aus dem Hohlraum der ersten hydraulischen Dichtung abgeführt werden.

Bei dieser Ausführungsform weist nur die erste hydraulische Dichtung auf der von der Wand abgewandten Seite eine Stillstandsdichtung auf. Aufgrund der Anordnung der zweiten hydraulischen Dichtung im Innern der ersten hydraulischen Dichtung reicht eine einzige Stillstandsdichtung aus.

In allen Ausführungsformen ist an der ersten hydraulischen Dichtung mindestens eine Einspritzdüse angeordnet. Die Einspritzdüse ermöglicht eine gezielte Zufuhr des Dichtmediums zur ersten hydraulischen Dichtung.

Weiterhin kann an der zweiten hydraulischen Dichtung mindestens eine zweite Einspritzdüse angeordnet sein. Die zweite Einspritzdüse ermöglicht eine gezielte Zufuhr des Dichtmediums zu der zweiten hydraulischen Dichtung.

Alternativ ist bei der vierten Ausführungsform nur an der zweiten hydraulischen Dichtung mindestens eine Einspritzdüse angeordnet. Durch den zweiten Kanal wird das Dichtmedium in die erste hydraulische Dichtung weitergeleitet, so dass eine zweite Einspritzdüse für die zweite hydraulische Dichtung nicht erforderlich ist.

Die Vorrichtung kann in einem Luft- oder Raumfahrt-Strahltriebwerk verwendet werden. Bei Strahltriebwerken treffen z.B. im Verdichterbereich Räume mit verschieden hohen Drücken aufeinander. Zur Abdichtung dieser Räume ist mindestens eine hydraulische Dichtung der Vorrichtung besonders gut geeignet, da sie besonders wartungsarm sind. Außerdem kann die Vorrichtung in chemischen und prozesstechnischen Anlagen verwendet werden.

Im Folgenden werden der Stand der Technik und zwei Ausführungsbeispiele der erfindungsgemäßen Vorrichtung zum Abdichten mindestens einer in einem Gehäuse angeordneten Welle mit mindestens einer hydraulischen Dichtung anhand von Figuren näher erläutert. Es zeigen:
- Fig. 1: eine Konstruktionszeichnung einer Lagerkammer mit Bürstendichtungen für zwei gegenrotierende Wellen eines Verdichters in einem Strahltriebwerk (Stand der Technik),
- Fig. 2: eine schematische Darstellung eines ersten Ausführungsbeispiels der erfindungsgemäßen Vorrichtung mit zwei separaten hydraulischen Dichtungen und
- Fig. 3: eine schematische Darstellung eines zweiten Ausführungsbeispiels der erfindungsgemäßen Vorrichtung mit zwei ineinander angeordneten hydraulischen Dichtungen.

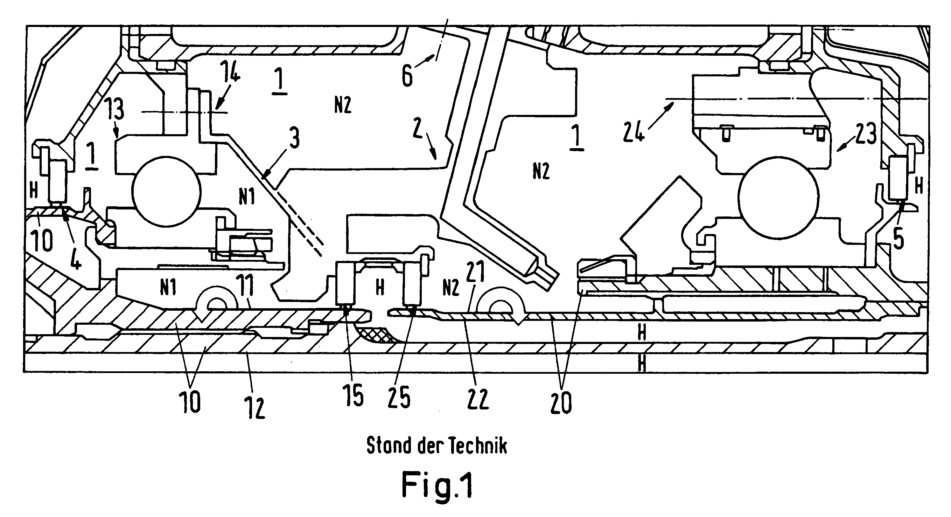

Fig. 1 zeigt einen Halbschnitt durch ein Gehäuse mit einer Lageranordnung für zwei Wellen 10, 20 in einem Strahltriebwerk nach dem Stand der Technik. Das Gehäuse umschließt eine Lagerkammer 1.

Die Lagerkammer 1 umschließt eine Öleinspritzeinrichtung 2, eine interne Wand 3, eine vordere Bürstendichtung 4 und eine hintere Bürstendichtung 5. Außerdem befinden sich in der Lagerkammer 1 die erste Welle 10 mit einem ersten Lager 13, eine erste Verschraubung 14 und eine erste Bürstendichtung 15. Ferner sind in der Lagerkammer 1 die zweite Welle 20 mit einem zweiten Lager 23, eine zweite Verschraubung 24 und eine zweite Bürstendichtung 25 angeordnet.

Die Lagerkammer 1 ist durch die interne Wand 3 in zwei Niederdruckbereiche N1 und N2 unterteilt. Die erste Welle 10 weist eine Außenseite 11 und eine Innenseite 12 auf. Die zweite Welle 20 umfasst eine Außenseite 21 und eine Innenseite 22.

Im ersten Niederdruckbereich N1 trägt das erste Lager 13 die erste Welle 10 und ist mittels der ersten Verschraubung 14 in der Lagerkammer 1 befestigt. Mittels der ersten Verschraubung 14 ist auch die interne Wand 3 an der Lagerkammer 1 befestigt. Die vordere Bürstendichtung 4 ist zwischen der Lagerkammer 1 und der ersten Welle 10 angeordnet. Die erste Bürstendichtung 15 ist zwischen der internen Wand 3 und der Außenseite 11 der ersten Welle 10 vorgesehen.

Im zweiten Niederdruckbereich N2 trägt das zweite Lager 23 die zweite Welle 20 und ist mittels der zweiten Verschraubung 24 in der Lagerkammer 1 befestigt. Die hintere Bürstendichtung 5 ist zwischen der Lagerkammer 1 und der zweiten Welle 20 angeordnet. Die zweite Bürstendichtung 25 ist zwischen der internen Wand 3 und der Außenseite 21 der zweiten Welle 20 vorgesehen. Mittels einer Verschraubung 6 ist die Öleinspritzeinrichtung 2 an der Lagerkammer 1 befestigt.

Die erste Welle 10 und die zweite Welle 20 sind konzentrisch um dieselbe nicht dargestellte horizontale Längsachse angeordnet und verlaufen teilweise ineinander. Die erste Welle 10 trägt den nicht dargestellten Niederdruckverdichter, während die zweite Welle 20 den nicht dargestellten Hochdruckverdichter trägt.

Die Bürstendichtungen 4, 5, 15, 25 sind in herkömmlicher Weise aufgebaut, wobei die Einzelteile nicht dargestellt sind. Bei jeder Bürstendichtung 4, 5, 15, 25 sind am radial inneren Rand einer Ringscheibe radial nach innen gerichtete Borsten befestigt, die die Außenseiten 11, 21 der ersten bzw. zweiten Welle 10, 20 berühren.

Im Betrieb ist die Lagerkammer 1 von einem Hochdruckbereich H in einem Verdichter des Strahltriebwerks umgeben, in dem der hohe Druck der verdichteten Luft ansteht. Der Hochdruckbereich H reicht bis in das Innere der ersten und der zweiten Welle 10, 20 hinein. Der erste Niederdruckbereich N1 und der zweite Niederdruckbereich N2 in der Lagerkammer 1 weisen im Idealfall gleiche Drücke auf, damit die interne Wand 3 nicht belastet wird. Das zur Schmierung des ersten und zweiten Lagers 13, 23 benötigte Öl wird den Lagern 13, 23 durch die Öleinspritzeinrichtung 2 zugeführt und in der Lagerkammer 1 verwirbelt. Das jeweils entstehende Öl-Luft-Gemisch wird aus dem ersten Niederdruckbereich N1 und aus dem zweiten Niederdruckbereich N2 getrennt abgesaugt, wodurch die niedrigen Drücke erzeugt werden.

Die vordere Bürstendichtung 4 dichtet den ersten Niederdruckbereich N1 zwischen der Lagerkammer 1 und der ersten Welle 10 gegenüber dem Hochdruckbereich H ab. Die Abdichtung zwischen der internen Wand 3 und der ersten Welle 10 erfolgt mittels der ersten Bürstendichtung 15.

Die hintere Bürstendichtung 5 dichtet den zweiten Niederdruckbereich N2 zwischen der Lagerkammer 1 und der zweiten Welle 20 gegenüber dem Hochdruckbereich H ab. Die Abdichtung zwischen der internen Wand 3 und der zweiten Welle 20 erfolgt mittels der zweiten Bürstendichtung 25.

Die erste Welle 10 des Niederdruckverdichters rotiert langsamer als die zweite Welle 20 des Hochdruckverdichters. Außerdem rotieren die beiden Wellen 10, 20 gegenläufig. Daher schleifen die Borsten der vorderen Bürstendichtung 4 und der ersten Bürstendichtung 15 nur über die Außenseite 11 der ersten Welle 10. Die Borsten der hinteren Bürstendichtung 5 und der zweiten Bürstendichtung 25 schleifen nur über die Außenseite 21 der zweiten Welle 20.

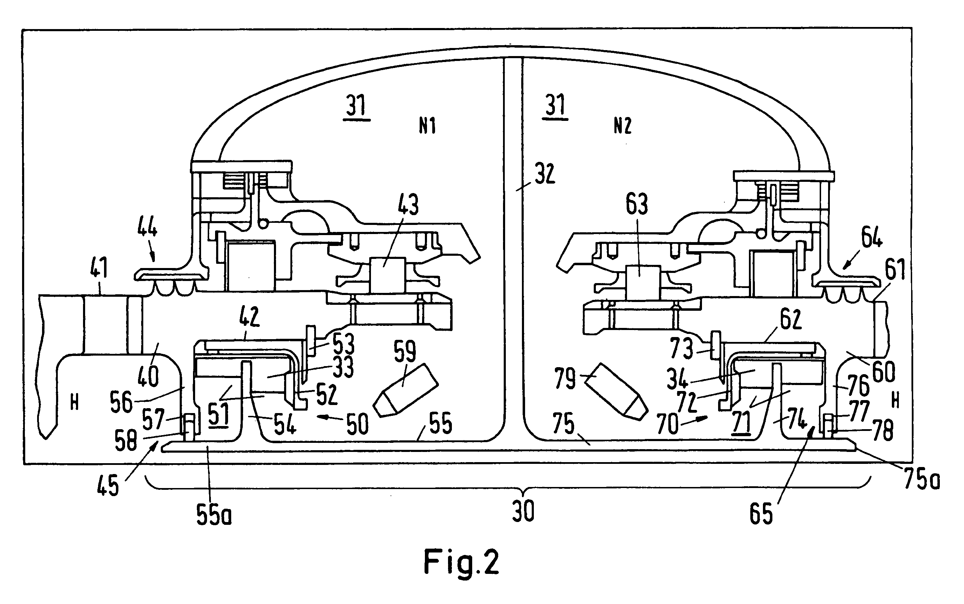

Fig. 2 zeigt einen Halbschnitt des ersten Ausführungsbeispiels einer erfindungsgemäßen Vorrichtung 30 in dem oben genannten Verdichter eines Strahltriebwerks.

Die Vorrichtung 30 umfasst ein Gehäuse mit einer Lagerkammer 31, eine zu dieser gehörende Wand 32, eine erste Welle 40, ein erstes Lager 43, eine erste Labyrinthdichtung 44 und eine erste hydraulische Dichtung 50 mit einer ersten Einspritzdüse 59. Weiterhin umfasst die Vorrichtung 30 eine zweite Welle 60, ein zweites Lager 63, eine zweite Labyrinthdichtung 64 und eine zweite hydraulische Dichtung 70 mit einer zweiten Einspritzdüse 79.

Die erste Welle 40 weist eine Außenseite 41 und eine Innenseite 42 auf. Die zweite Welle 60 weist eine Außenseite 61 und eine Innenseite 62 auf. Die erste Welle 40 und die zweite Welle 60 weisen eine gemeinsame, nicht dargestellte Längsachse auf.

Die erste hydraulische Dichtung 50 umfasst einen Hohlraum 51, einen Einsatz 52, einen Sicherungsring 53, ein Dichtelement 54 mit einem Verbindungsstück 55 und einer Verlängerung 55a, eine Ringscheibe 56 mit einer Nut 57 und einen Kolbenring 58. Die zweite hydraulische Dichtung 70 umfasst einen Hohlraum 71, einen Einsatz 72, einen Sicherungsring 73, ein Dichtelement 74 mit einem Verbindungsstück 75 und einer Verlängerung 75a, eine Ringscheibe 76 mit einer Nut 77 und einen Kolbenring 78.

Die Vorrichtung 30 ist in einem Gehäuse angeordnet, das im Folgenden als Lagerkammer 31 bezeichnet wird. Die Lagerkammer 31 ist durch die senkrechte Wand 32 in einen ersten Niederdruckbereich N1 und einen zweiten Niederdruckbereich N2 geteilt.

Die erste Welle 40 ragt horizontal in den ersten Niederdruckbereich N1 hinein. Das erste Lager 43 ist in der Lagerkammer 31 befestigt und trägt die erste Welle 40. Die erste hydraulische Dichtung 50 ist an der Innenseite 42 der ersten Welle 40 angeordnet.

Die erste hydraulische Dichtung 50 ist zum ersten Niederdruckbereich N1 hin durch den ringförmigen, radial nach innen abgewinkelten Einsatz 52 begrenzt. Der Einsatz 52 ist an der Innenseite 42 der ersten Welle 40 angeordnet und durch den Sicherungsring 53 gesichert. Zum Hochdruckbereich H hin ist die erste hydraulische Dichtung 50 durch die mit der ersten Welle 40 fest verbundene, radial nach innen gerichtete Ringscheibe 56 begrenzt. Der Einsatz 52 und die Ringscheibe 56 bilden zusammen den ringförmigen Hohlraum 51.

Das ringförmige Dichtelement 54 ragt radial in den Hohlraum 51 hinein. An das Dichtelement 54 schließt sich in Richtung des ersten Niederdruckbereichs N1 das ringförmige Verbindungsstück 55 an, das mit der Wand 32 fest verbunden ist. In Richtung des Hochdruckbereichs H schließt sich an das Dichtelement 54 die ebenfalls ringförmige Verlängerung 55a an. Die Ringscheibe 56 ist mit der Innenseite 42 der ersten Welle 40 verbunden und weist an ihrem inneren Umfang eine Stillstandsabdichtung 45 auf, die aus der nach innen gerichteten radialen Nut 57 und dem in diese eingesetzten Kolbenring 58 besteht. Der Kolbenring 58 grenzt radial innen an die Verlängerung 55a des Dichtelements 54 an.

Die erste Einspritzdüse 59 ist auf einen ringförmigen Zwischenraum gerichtet, der zwischen dem Einsatz 52 und dem ringförmigen Verbindungsstück 55 des Dichtelements 54 vorhanden ist. An der Außenseite 41 der ersten Welle 40 befindet sich die erste Labyrinthdichtung 44, die mit der Lagerkammer 31 verbunden ist.

Die zweite Welle 60 ragt horizontal in den zweiten Niederdruckbereich N2 hinein. Das zweite Lager 63 ist in der Lagerkammer 31 befestigt und trägt die zweite Welle 60. Die zweite hydraulische Dichtung 70 ist an der Innenseite 62 der zweiten Welle 60 angeordnet.

Die zweite hydraulische Dichtung 70 ist zum zweiten Niederdruckbereich N2 hin durch den ringförmigen, radial nach innen abgewinkelten Einsatz 72 begrenzt. Der Einsatz 72 ist an der Innenseite 62 der zweiten Welle 60 angeordnet und durch den Sicherungsring 73 gesichert. Zum Hochdruckbereich H hin ist die zweite hydraulische Dichtung 70 durch die mit der zweiten Welle 60 fest verbundene, radial nach innen gerichtete Ringscheibe 76 begrenzt. Der Einsatz 72 und die Ringscheibe 76 bilden zusammen den ringförmigen Hohlraum 71.

Das ringförmige Dichtelement 74 ragt radial in den Hohlraum 71 hinein. An das Dichtelement 74 schließt sich in Richtung des zweiten Niederdruckbereichs N2 das ringförmige Verbindungsstück 75 an, das mit der Wand 32 fest verbunden ist. In Richtung des Hochdruckbereichs H schließt sich an das Dichtelement 74 die ebenfalls ringförmige Verlängerung 75a an. Die Ringscheibe 76 ist mit der Innenseite 62 der zweiten Welle 60 verbunden und weist an ihrem inneren Umfang eine Stillstandsabdichtung 65 auf, die aus der nach innen gerichteten radialen Nut 77 und dem in diese eingesetzten Kolbenring 78 besteht. Der Kolbenring 78 grenzt an die Verlängerung 75a des Dichtelements 74 an.

Die zweite Einspritzdüse 79 ist auf einen ringförmigen Zwischenraum gerichtet, der zwischen dem Einsatz 72 und dem ringförmigen Verbindungsstück 75 des Dichtelements 74 vorhanden ist. An der Außenseite 61 der zweiten Welle 60 befindet sich die zweite Labyrinthdichtung 64, die mit der Lagerkammer 31 verbunden ist.

Anstelle der Labyrinthdichtungen 44 und 64 könnte ebenfalls je eine hydraulische Dichtung zwischen der Lagerkammer 31 und der Außenseite 41 der ersten Welle 40 bzw. der Außenseite 61 der zweiten Welle 60 eingesetzt werden.

Im Betrieb ist die Lagerkammer 1 wie beim Stand der Technik (vgl. Fig. 1) von einem Hochdruckbereich H in einem Verdichter des Strahltriebwerks umgeben, in dem der hohe Druck der verdichteten Luft ansteht. Der Hochdruckbereich H reicht bis in das Innere der ersten und der zweiten Welle 40, 60 hinein.

Es wird Öl mittels der ersten Einspritzdüse 59 durch den Zwischenraum zwischen dem Einsatz 52 und dem Verbindungsstück 55 des Dichtelements 54 in die erste hydraulische Dichtung 50 gespritzt. Der Einsatz 52 rotiert mit der ersten Welle 40 mit und erzeugt somit eine Fliehkraft in dem eingespritzten Öl. Das Öl wird innerhalb des Hohlraums 51 radial nach außen geführt. Dadurch füllt das Öl 33 den radial äußeren Bereich des Hohlraums 51 und damit auch den Spalt zwischen dem Einsatz 52 und dem Dichtelement 54 aus. Der hohe Druck im Hochdruckbereich H drückt das Öl 33 zusätzlich in den Hohlraum 51 hinein. Durch das Öl 33 werden somit der erste Niederdruckbereich N1 und der Hochdruckbereich H gegeneinander abgedichtet.

Der Hohlraum 51 kann außerdem mit einem Kanal versehen sein, der das Öl 33 aus dem Hohlraum 51 herausleitet und einer nicht dargestellten Kühleinrichtung zuführt. Nach dem Durchlaufen der Kühleinrichtung kann das Öl 33 wieder der ersten hydraulischen Dichtung 50 zugeführt werden.

Bei einem Stillstand der ersten Welle 40 legt sich der Kolbenring 58 der Stillstandsabdichtung 45 an die Verlängerung 55a des Dichtelements 54 an und verhindert so ein Auslaufen des Öls 33, das dann nicht mehr durch Fliehkraft in den Hohlraum 51 gedrückt wird.

Außerdem wird Öl mittels der zweiten Einspritzdüse 79 durch den Zwischenraum zwischen dem Einsatz 72 und dem Verbindungsstück 75 des Dichtelements 74 in die zweite hydraulische Dichtung 70 gespritzt. Der Einsatz 72 rotiert mit der zweiten Welle 60 mit und erzeugt somit eine Fliehkraft in dem eingespritzten Öl. Das Öl wird innerhalb des Hohlraums 71 radial nach außen geführt. Dadurch füllt das Öl 34 den radial äußeren Bereich des Hohlraums 71 und damit auch den Spalt zwischen dem Einsatz 72 und dem Dichtelement 74 aus. Der hohe Druck im Hochdruckbereich H drückt das Öl 34 zusätzlich in den Hohlraum 71 hinein. Durch das Öl 34 werden somit der zweite Niederdruckbereich N2 und der Hochdruckbereich H gegeneinander abgedichtet.

Der Hohlraum 71 kann außerdem mit einem Kanal versehen sein, der das Öl 34 aus dem Hohlraum 71 herausleitet und einer nicht dargestellten Kühleinrichtung zuführt. Nach dem Durchlaufen der Kühleinrichtung kann das Öl 34 wieder der zweiten hydraulischen Dichtung 70 zugeführt werden.

Dadurch, dass die erste hydraulische Dichtung 50 und die zweite hydraulische Dichtung 70 voneinander getrennt sind, können z.B. unterschiedliche Öle für ggf. unterschiedliche Einsatzbedingungen im ersten Niederdruckbereich N1 und im zweiten Niederdruckbereich N2 verwendet werden.

Bei einem Stillstand der zweiten Welle 60 legt sich der Kolbenring 78 der Stillstandsabdichtung 65 an die Verlängerung 75a des Dichtelements 74 an und verhindert so ein Auslaufen des Öls 34, das dann nicht mehr durch Fliehkraft in den Hohlraum 71 gedrückt wird.

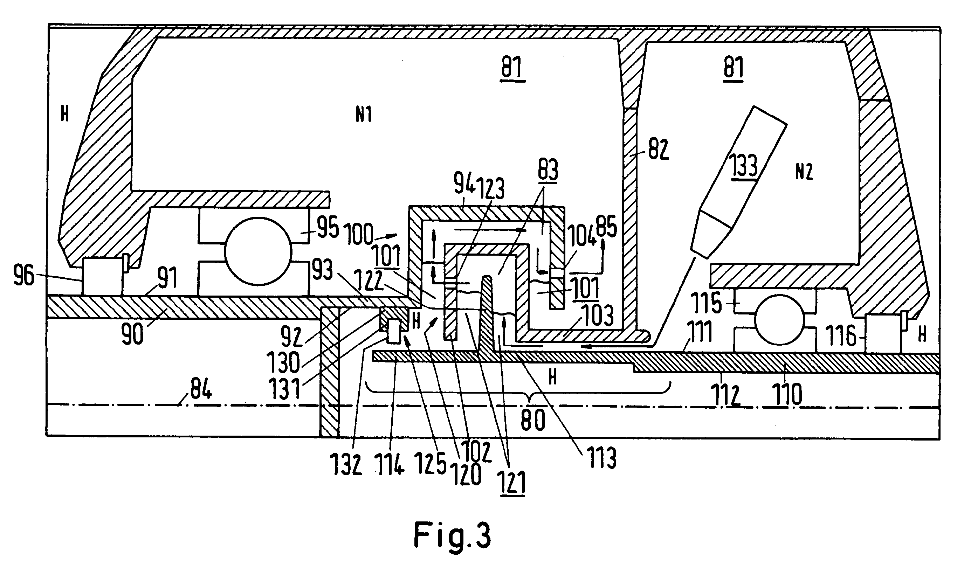

Fig. 3 zeigt einen Halbschnitt des zweiten Ausführungsbeispiels einer erfindungsgemäßen Vorrichtung 80 in dem oben genannten Verdichter eines Strahltriebwerks.

Die Vorrichtung 80 umfasst eine zum Gehäuse bzw. zur Lagerkammer 81 gehörende Wand 82, eine erste Welle 90, ein erstes Lager 95, eine erste Wellendichtung 96 und eine erste hydraulische Dichtung 100. Weiterhin umfasst die Vorrichtung 80 eine zweite Welle 110, ein zweites Lager 115, eine zweite Wellendichtung 116, eine zweite hydraulische Dichtung 120 und eine Einspritzdüse 133.

Die erste Welle 90 weist eine Außenseite 91, eine Innenseite 92, ein Wellenende 93 und eine Verlängerung 94 mit einem Kanal 104 auf. Die zweite Welle 110 weist eine Außenseite 111, eine Innenseite 112, ein Wellenende 113 und eine Verlängerung 114 auf. Die erste Welle 90 und die zweite Welle 110 weisen eine gemeinsame Längsachse 84 auf.

Die erste hydraulische Dichtung 100 umfasst einen Hohlraum 101, ein Dichtelement 102 mit einem Kanal 104 und einem Verbindungsstück 103 sowie eine Ringscheibe 130 mit einer Nut 131 und einem Kolbenring 132, welche eine Stillstandsabdichtung 125 bilden. Die zweite hydraulische Dichtung 120 umfasst einen Hohlraum 121 und ein Dichtelement 122 mit einer Verlängerung 114 an dem Wellenende 113.

Die Vorrichtung 80 ist in einem Gehäuse angeordnet, das im Folgenden als Lagerkammer 81 bezeichnet wird. Die Lagerkammer 81 ist durch die senkrechte Wand 82 in einen ersten Niederdruckbereich N1 und einen zweiten Niederdruckbereich N2 geteilt.

Die erste Welle 90 ragt horizontal in den ersten Niederdruckbereich N1 hinein. Das erste Lager 95 ist in der Lagerkammer 81 befestigt und trägt die erste Welle 90. Die erste hydraulische Dichtung 100 schließt sich an das Wellenende 93 an. An der Außenseite 91 der ersten Welle 90 befindet sich die erste Wellendichtung 96, die mit der Lagerkammer 81 verbunden ist.

Die erste hydraulische Dichtung 100 ist zum ersten Niederdruckbereich N1 hin durch die Verlängerung 94 der ersten Welle 90 begrenzt. Die Verlängerung 94 ist ringförmig, weist einen U-förmigen Querschnitt auf und ist radial nach innen offen. Parallel zur Längsachse 84 und in Richtung zur Wand 82 befindet sich der Kanal 104 in der Verlängerung 94. Zum Hochdruckbereich H hin ist die erste hydraulische Dichtung 100 durch die mit der ersten Welle 90 fest verbundene, radial nach innen gerichtete Ringscheibe 130 begrenzt. Die Ringscheibe 130 weist an ihrem inneren Umfang die Stillstandsabdichtung 125 mit der radial nach innen gerichteten radialen Nut 131 auf, in die der Kolbenring 132 eingesetzt ist.

Das ringförmige Dichtelement 102 mit U-förmigem, radial nach innen offenen Querschnitt ragt radial in den Hohlraum 101 hinein. Das Dichtelement 102 schließt sich an das ringförmige Verbindungsstück 103 der Wand 82 an. Parallel zur Längsachse 84 und entgegengesetzt zur Wand 82 befindet sich der Kanal 123 in dem Dichtelement 102.

Die zweite Welle 110 ragt horizontal in den zweiten Niederdruckbereich N2 hinein. Das zweite Lager 115 ist in der Lagerkammer 81 befestigt und trägt die zweite Welle 110. Die zweite hydraulische Dichtung 120 schließt sich an das Wellenende 113 an. An der Außenseite 111 der zweiten Welle 110 befindet sich die zweite Wellendichtung 116, die mit der Lagerkammer 81 verbunden ist.

Die zweite hydraulische Dichtung 120 ist zur ersten Hydraulischen Dichtung 100 hin durch das im Querschnitt U-förmige Dichtelement 102 begrenzt, das über das ringförmige Verbindungsstück 103 mit der Wand 82 verbunden ist und den Hohlraum 121 bildet.

Das ringförmige, massive Dichtelement 122 ist fest mit dem Wellenende 113 der zweiten Welle 110 verbunden und ragt radial in den Hohlraum 121 hinein. An das Dichtelement 122 schließt sich in axialer Richtung die ringförmige Verlängerung 114 der zweiten Welle 110 an, die in die Verlängerung 94 der ersten Welle 90 eingeführt ist.

Die Einspritzdüse 133 ist auf den ringförmigen Zwischenraum gerichtet, der zwischen dem Verbindungsstück 103 und dem Wellenende 113 der zweiten Welle 110 der zweiten hydraulischen Dichtung 120 vorhanden ist. Es kann außerdem eine zusätzliche Einspritzdüse auf den Zwischenraum zwischen der Verlängerung 94 und dem Dichtelement 102 der ersten hydraulischen Dichtung 100 gerichtet sein.

Die erste und zweite Wellendichtung 96 und 116 können ebenfalls als hydraulische Dichtungen ausgeführt sein.

Im Betrieb ist die Lagerkammer 81 wie beim Stand der Technik (vgl. Fig. 1) von einem Hochdruckbereich H in einem Verdichter des Strahltriebwerks umgeben, in dem der hohe Druck der verdichteten Luft ansteht. Der Hochdruckbereich H reicht bis in das Innere der ersten und der zweiten Welle 90, 110 hinein.

Es wird Öl mittels der Einspritzdüse 133 durch den Zwischenraum zwischen dem Verbindungsstück 103 und dem Wellenende 113 der zweiten Welle 110 in die zweite hydraulische Dichtung 120 gespritzt. Die Rotation der zweiten Welle 110 und des Dichtelements 122 erzeugt eine Fliehkraft in dem eingespritzten Öl 83. Das Öl 83 wird innerhalb des Hohlraums 121 durch die Fliehkraft radial nach außen geführt. Dadurch füllt das Öl 83 den radial äußeren Bereich des Hohlraums 121 und damit auch den Spalt zwischen dem Dichtelement 122 und dem Dichtelement 102 aus. Der hohe Druck im Hochdruckbereich H drückt das Öl 83 zusätzlich in den Hohlraum 121 hinein. Durch das Öl 83 werden somit der zweite Niederdruckbereich N2 und der Hochdruckbereich H gegeneinander abgedichtet. Ein Teil des Öls wird durch den Kanal 123 aus der zweiten hydraulischen Dichtung 120 in die erste hydraulische Dichtung 100 hineingeleitet.

In der ersten hydraulischen Dichtung 100 wirkt durch die Rotation der Verlängerung 94 der ersten Welle 90 eine Fliehkraft auf das Öl 83 ein, so dass es in den Hohlraum 101 gedrückt wird. Das Öl 83 füllt somit den Hohlraum 101 zwischen der Verlängerung 94 und dem Dichtelement 102 aus und dichtet so den Niederdruckbereich N1 gegen den Hochdruckbereich H ab. Der hohe Druck im Hochdruckbereich H drückt das Öl 83 zusätzlich in den Hohlraum 121 hinein. Nachdem das Öl 83 den Hohlraum 101 durchströmt hat, wird ein Teilstrom 85 des Öls 83 durch den Kanal 104 herausgeleitet und einer nicht dargestellten Kühleinrichtung zugeführt. Nach dem Kühlen des Öls in der Kühleinrichtung, kann das Öl erneut der ersten und zweiten hydraulischen Dichtung 100, 120 zugeführt werden.

Bei diesem Ausführungsbeispiel erfüllt das Dichtelement 102 der ersten hydraulischen Dichtung 100 eine Doppelfunktion, denn das Dichtelement 102 der ersten hydraulischen Dichtung 100 bildet gleichzeitig den Hohlraum 121 der zweiten hydraulischen Dichtung 120. Das Dichtelement 102 ist somit gemeinsamer Bestandteil der ersten hydraulischen Dichtung 100 und der zweiten hydraulischen Dichtung 120.

Wegen des feststehenden Dichtelements 102 ist die Vorrichtung 80 besonders für gegenläufige Wellen geeignet, wobei die erste Welle 90 außen um das Dichtelement herum und die zweite Welle 110 im Innern des Dichtelements 102 rotieren.

Sowohl die Verlängerung 94 als auch das Dichtelement 102 können im Reibschweißverfahren aus zwei ringförmigen Teilen hergestellt werden. Die Befestigung der Verlängerung 94 an dem Wellenende 93 und des Dichtelements 102 an dem Verbindungsstück 103 können durch nicht dargestellte Flansche erfolgen.

Statt Öl können auch verschiedenartige hydraulische Dichtmedien, die chemisch miteinander verträglich und mischbar sind, verwendet werden.

Insbesondere bei der Verwendung der Vorrichtung in chemischen oder prozesstechnischen Anlagen ist es wichtig, dass der erste Niederdruckbereich N1 und der zweite Niederdruckbereich N2 durch die Wand 32, 82 von einander getrennt sind, damit die in den Niederdruckbereichen N1, N2 enthaltenen Gaszusammensetzungen nicht miteinander reagieren oder sich mischen können. Anstelle der Gaszusammensetzung kann auch in einem oder beiden Niederdruckbereichen N1, N2 ein Vakuum vorherrschen.

### Bezugszeichenliste

- H: Hochdruckbereich
- N1: Erster Niederdruckbereich
- N2: Zweiter Niederdruckbereich

- 1: Lagerkammer
- 2: Öleinspritzeinrichtung
- 3: Interne Wand
- 4: Vordere Bürstendichtung
- 5: Hintere Bürstendichtung
- 6: Verschraubung

- 10: Erste Welle
- 11: Außenseite
- 12: Innenseite
- 13: Erstes Lager
- 14: Erste Verschraubung
- 15: Erste Bürstendichtung

- 20: Zweite Welle
- 21: Außenseite
- 22: Innenseite
- 23: Zweites Lager
- 24: Zweite Verschraubung
- 25: Zweite Bürstendichtung

- 30: Vorrichtung
- 31: Lagerkammer
- 32: Wand
- 33: Öl
- 34: Öl

- 40: Erste Welle
- 41: Außenseite
- 42: Innenseite
- 43: Erstes Lager
- 44: Erste Labyrinthdichtung
- 45: Stillstandsabdichtung

- 50: Erste hydraulische Dichtung
- 51: Hohlraum
- 52: Einsatz
- 53: Sicherungsring
- 54: Dichtelement
- 55: Verbindungsstück
- 55a: Verlängerung
- 56: Ringscheibe
- 57: Nut
- 58: Kolbenring
- 59: Erste Einspritzdüse

- 60: Zweite Welle
- 61: Außenseite
- 62: Innenseite
- 63: Zweites Lager
- 64: Zweite Labyrinthdichtung
- 65: Stillstandsabdichtung

- 70: Zweite hydraulische Dichtung
- 71: Hohlraum
- 72: Einsatz
- 73: Sicherungsring
- 74: Dichtelement
- 75: Verbindungsstück
- 75a: Verlängerung
- 76: Ringscheibe
- 77: Nut
- 78: Kolbenring
- 79: Zweite Einspritzdüse

- 80: Vorrichtung
- 81: Lagerkammer
- 82: Wand
- 83: Öl
- 84: Längsachse
- 85: Teil des Öls

- 90: Erste Welle
- 91: Außenseite
- 92: Innenseite
- 93: Wellenende
- 94: Verlängerung
- 95: Erstes Lager
- 96: Erste Wellendichtung

- 100: Erste hydraulische Dichtung
- 101: Hohlraum
- 102: Dichtelement
- 103: Verbindungsstück
- 104: Kanal

- 110: Zweite Welle
- 111: Außenseite
- 112: Innenseite
- 113: Wellenende
- 114: Verlängerung
- 115: Zweites Lager
- 116: Zweite Wellendichtung

- 120: Zweite hydraulische Dichtung
- 121: Hohlraum
- 122: Dichtelement
- 123: Kanal
- 125: Stillstandsabdichtung
- 130: Ringscheibe
- 131: Nut
- 132: Kolbenring
- 133: Einspritzdüse

## Patentansprüche

1. Vorrichtung zum Abdichten mindestens einer in einem Gehäuse angeordneten Welle (40, 60, 90, 110) mit mindestens einer hydraulischen Dichtung (50, 70, 100, 120), die mindestens einen im Wesentlichen ringförmigen, radial nach innen offenen Hohlraum (51, 71, 101, 121) und mindestens ein im Wesentlichen ringförmiges, radial nach außen gerichtetes Dichtelement (54, 74, 102, 122), das in den Hohlraum (51, 71, 101, 121) hineinragt, umfasst, und die mindestens eine hydraulische Dichtung (50, 70, 100, 120) an der Innenseite (42, 62, 92) oder an der Außenseite (111) der Welle (40, 60, 90, 110) angeordnet ist und der Hohlraum (51, 71, 101, 121) oder das Dichtelement (54, 74, 102, 122) der hydraulischen Dichtung (50, 70, 100, 120) mit einer Wand (32, 82) des Gehäuses (31, 81) verbunden ist **dadurch gekennzeichnet daß**, die Wand (32, 82) mindestens zwei Wellen (40, 60, 90, 110) voneinander trennt, wobei eine erste hydraulische Dichtung (50, 100) an der ersten Welle (40, 90) und eine zweite hydraulische Dichtung (70, 120) an der zweiten Welle (60, 110) angeordnet sind und die erste Welle (40, 90) und die zweite Welle (60, 110) gegenläufig rotierende Wellen sind.

2. Vorrichtung nach Anspruch 1, **dadurch gekennzeichnet, dass** die hydraulische Dichtung (50, 70, 100) auf der von der Wand (32, 82) abgewandten Seite eine Stillstandsabdichtung (45, 65, 125) aufweist.

3. Vorrichtung nach einem der Ansprüche 1 oder 2, **dadurch gekennzeichnet, dass** der Hohlraum (51, 71, 101) der hydraulischen Dichtung (50, 70, 100) mitrotierend an der Innenseite (42, 62, 92) der Welle (40, 60, 90) vorgesehen und das Dichtelement (54, 74, 102) mit der Wand (32, 82) verbunden sind.

4. Vorrichtung nach Anspruch 2 und 3, **dadurch gekennzeichnet, dass** die Stillstandsdichtung (45, 65, 125) eine Ringscheibe (56, 76, 130) umfasst, die mit der Innenseite (42, 62, 92) der Welle (40, 60, 90) verbunden ist und eine radial nach innen gerichtete Nut (57, 77, 131) aufweist, in die ein Kolbenring (58, 78, 132) eingesetzt ist, der an eine ringförmige Verlängerung (55a, 75a, 114) des Dichtelements (54, 74, 122) angrenzt.

5. Vorrichtung nach einem der Ansprüche 1 oder 2, **dadurch gekennzeichnet, dass** der Hohlraum (121) der hydraulischen Dichtung (120) in der Wand (82) vorgesehen und das Dichtelement (122) mitrotierend an der Außenseite (111) der Welle (110) angeordnet sind.

6. Vorrichtung nach Anspruch 2 und 5, **dadurch gekennzeichnet, dass** die Stillstandsdichtung eine Ringscheibe umfasst, die mit der Wand verbunden ist und eine radial nach innen gerichtete Nut aufweist, in die ein Kolbenring eingesetzt ist, der an die Welle angrenzt.

7. Vorrichtung nach einem der Ansprüche 1 bis 6, **dadurch gekennzeichnet, dass** die hydraulische Dichtung (50, 70, 100, 120) mit einer Kühleinrichtung versehen ist.

8. Vorrichtung nach Anspruch 7, **dadurch gekennzeichnet, dass** der Hohlraum (51, 71, 101, 121) der hydraulischen Dichtung (50, 70, 100, 120) über mindestens einen Kanal (104, 123) mit einer Abflussleitung und/oder einem Raum (N1, N2) zwischen der Welle (40, 60, 90, 110) und dem Gehäuse (31, 81) verbunden ist.

9. Vorrichtung nach einem der Ansprüche 1 bis 8, **dadurch gekennzeichnet, dass** die erste hydraulische Dichtung (50) und die zweite hydraulische Dichtung (70) auf den von der Wand(32) abgewandten Seiten jeweils eine Stillstandsabdichtung (45, 65) aufweisen.

10. Vorrichtung nach einem der Ansprüche 1 bis 8, **dadurch gekennzeichnet, dass** die zweite hydraulische Dichtung (120) im Innern der ersten hydraulischen Dichtung (100) angeordnet ist.

11. Vorrichtung nach Anspruch 10, **dadurch gekennzeichnet, dass** die zweite hydraulische Dichtung (120) einen im Wesentlichen ringförmigen Hohlraum (121) im Dichtelement (102) der ersten hydraulischen Dichtung (100) umfasst und ein im Wesentlichen ringförmiges Dichtelement (122) der zweiten hydraulischen Dichtung (120) in den Hohlraum (121) im Dichtelement (102) der ersten hydraulischen Dichtung (100) hineinragt.

12. Vorrichtung nach Anspruch 11, **dadurch gekennzeichnet, dass** das Dichtelement (102) der ersten hydraulischen Dichtung (100) mit der Wand (82) und das Dichtelement (122) der zweiten hydraulischen Dichtung (120) mit der zweiten Welle (110) verbunden sind.

13. Vorrichtung nach einem der Ansprüche 11 und 12, **dadurch gekennzeichnet, dass** ein zweiter Kanal (123) im Dichtelement (102) der ersten hydraulischen Dichtung (100) angeordnet ist, der den Hohlraum (121) der zweiten hydraulischen Dichtung (120) mit dem Hohlraum (101) der ersten hydraulischen Dichtung (100) verbindet.

14. Vorrichtung nach einem der Ansprüche 10 bis 13, **dadurch gekennzeichnet, dass** nur die erste hydraulische Dichtung (100) auf der von der Wand (82) abgewandten Seite eine Stillstandsdichtung (125) aufweist.

15. Vorrichtung nach einem der vorhergehenden Ansprüche, **dadurch gekennzeichnet, dass** an der ersten hydraulischen Dichtung (50) mindestens eine Einspritzdüse (59) angeordnet ist.

16. Vorrichtung nach einem der Ansprüche 1 bis 15, **dadurch gekennzeichnet, dass** an der zweiten hydraulischen Dichtung (70, 120) mindestens eine zweite Einspritzdüse (79, 133) angeordnet ist.

17. Vorrichtung nach einem der Ansprüche 10 bis 16, **dadurch gekennzeichnet, dass** nur an der zweiten hydraulischen Dichtung (120) mindestens eine Einspritzdüse(133) angeordnet ist.

18. Verwendung der Vorrichtung nach einem der vorhergehenden Ansprüche in einem Luft- oder Raumfahrt Strahltriebwerk oder in chemischen oder prozesstechnischen Anlagen.

## Claims

1. Arrangement for sealing at least one shaft (40, 60, 90, 110) arranged in a casing by means of at least one hydraulic seal (50, 70, 100, 120), which includes at least one essentially annular, radially inwardly open cavity (51, 71, 101, 121) and at least one essentially annular, radially outwardly directed sealing element (54, 74, 102, 122) which projects into the cavity (51, 71, 101, 121), with the at least one hydraulic seal (50, 70, 100, 120) being arranged on the inner side (42, 62, 92) or on the outer side (111) of the shaft (40, 60, 90, 110) and the cavity (51, 71, 101, 121) or the sealing element (54, 74, 102, 122) of the hydraulic seal (50, 70, 100, 120) being connected to a wall (32, 82) of the casing (31, 81), **characterized in that** the wall (32, 82) separates at least two shafts (40, 60, 90, 110) from each other, with a first hydraulic seal (50, 100) being arranged on the first shaft (40, 90) and a second hydraulic seal (70, 120) on the second shaft (60, 110), and that the first shaft (40, 90) and the second shaft (60, 110) are counter-rotating shafts.

2. Arrangement in accordance with Claim 1, **characterized in that** the hydraulic seal (50, 70, 100) is provided with a standstill seal (45, 65, 125) on the side facing away from the wall (32, 82).

3. Arrangement in accordance with one of the Claims 1 or 2, **characterized in that** the cavity (51, 71, 101) of the hydraulic seal (50, 70, 100) is co-rotatingly provided on the inner side (42, 62, 92) of the shaft (40, 60, 90) and that the sealing element (54, 74, 102) is connected to the wall (32, 82).

4. Arrangement in accordance with Claims 2 and 3, **characterized in that** the standstill seal (45, 65, 125) includes an annular disk (56, 76, 130), which is connected to the inner side (42, 62, 92) of the shaft (40, 60, 90) and features a radially inwardly directed groove (57, 77, 131), into which a piston ring (58, 78, 132) is inserted which adjoins an annular extension (55a, 75a, 114) of the sealing element (54, 74, 122).

5. Arrangement in accordance with one of the Claims 1 or 2, **characterized in that** the cavity (121) of the hydraulic seal (120) is provided in the wall (82) and that the sealing element (122) is co-rotatingly arranged on the outer side (111) of the shaft (110).

6. Arrangement in accordance with Claims 2 and 5, **characterized in that** the standstill seal includes an annular disk, which is connected to the wall and features a radially inwardly directed groove, into which a piston ring is inserted which adjoins the shaft.

7. Arrangement in accordance with one of the Claims 1 to 6, **characterized in that** the hydraulic seal (50, 70, 100, 120) is provided with a cooling device.

8. Arrangement in accordance with Claim 7, **characterized in that** the cavity (51, 71, 101, 121) of the hydraulic seal (50, 70, 100, 120) is connected via at least one duct (104, 123) to a drain line and/or a space (N1, N2) between the shaft (40, 60, 90, 110) and the casing (31, 81).

9. Arrangement in accordance with one of the Claims 1 to 8, **characterized in that** the first hydraulic seal (50) and the second hydraulic seal (70) each feature a standstill seal (45, 65) on the sides facing away from the wall (32).

10. Arrangement in accordance with one of the Claims 1 to 8, **characterized in that** the second hydraulic seal (120) is arranged in the interior of the first hydraulic seal (100).

11. Arrangement in accordance with Claim 10, **characterized in that** the second hydraulic seal (120) includes an essentially annular cavity (121) in the sealing element (102) of the first hydraulic seal (100) and that an essentially annular sealing element (122) of the second hydraulic seal (120) projects into the cavity (121) in the sealing element (102) of the first hydraulic seal (100).

12. Arrangement in accordance with Claim 11, **characterized in that** the sealing element (102) of the first hydraulic seal (100) is connected to the wall (82) and the sealing element (122) of the second hydraulic seal (120) to the second shaft (110).

13. Arrangement in accordance with one of the Claims 11 and 12, **characterized in that** a second duct (123) is arranged in the sealing element (102) of the first hydraulic seal (100) and connects the cavity (121) of the second hydraulic seal (120) to the cavity (101) of the first hydraulic seal (100).

14. Arrangement in accordance with one of the Claims 10 to 13, **characterized in that** only the first hydraulic seal (100) features a standstill seal (125) on the side facing away from the wall (82).

15. Arrangement in accordance with one of the preceding Claims, **characterized in that** at least one injection nozzle (59) is arranged on the first hydraulic seal (50).

16. Arrangement in accordance with one of the Claims 1 to 15, **characterized in that** at least one second injection nozzle (79, 133) is arranged on the second hydraulic seal (70, 120).

17. Arrangement in accordance with one of the Claims 10 to 16, **characterized in that** at least one injection nozzle (133) is arranged on the second hydraulic seal (120) only.

18. Application of the arrangement in accordance with one of the preceding Claims in an aeronautical or aerospace jet engine or in chemical or process plants.

## Revendications

1. Dispositif d'étanchement d'au moins un arbre (40, 60, 90, 110) disposé dans un carter, comprenant au moins un joint hydraulique (50, 70, 100, 120) constitué d'au moins une cavité (51, 71, 101, 121) pour l'essentiel annulaire, ouverte radialement vers l'intérieur, et d'au moins un élément d'étanchéité (54, 74, 102, 122) pour l'essentiel annulaire, dirigé radialement vers l'extérieur et faisant saillie dans la cavité (51, 71, 101, 121), sachant que l'au moins un joint hydraulique (50, 70, 100, 120) est disposé sur la face intérieure (42, 62, 92) ou sur la face extérieure (111) de l'arbre (40, 60, 90, 110), et que la cavité (51, 71, 101, 121) ou l'élément d'étanchéité (54, 74, 102, 122) du joint hydraulique (50, 70, 100, 120) est relié(e) à une paroi (32, 82) du carter (31, 81), **caractérisé en ce que** la paroi (32, 82) sépare au moins deux arbres (40, 60, 90, 110), sachant qu'un premier joint hydraulique (50, 100) est disposé sur le premier arbre (40, 90), qu'un deuxième joint hydraulique (70, 120) est disposé sur le deuxième arbre (60, 110), et que le premier arbre (40, 90) et le deuxième arbre (60, 110) sont des arbres tournant en sens inverses.

2. Dispositif selon la revendication n° 1, **caractérisé en ce que** le joint hydraulique (50, 70, 100) présente un dispositif d'étanchéité à l'arrêt (45, 65, 125) du côté opposé à la paroi (32, 82).

3. Dispositif selon une des revendications n° 1 ou n° 2, **caractérisé en ce que** la cavité (51, 71, 101) du joint hydraulique (50, 70, 100) est prévue de façon co-rotative sur la face intérieure (42, 62, 92) de l'arbre (40, 60, 90) et que l'élément d'étanchéité (54, 74, 102) est relié à la paroi (32, 82).

4. Dispositif selon les revendications n° 2 et n° 3, **caractérisé en ce que** le dispositif d'étanchéité à l'arrêt (45, 65, 125) comprend un disque annulaire (56, 76, 130) relié à la face intérieure (42, 62, 92) de l'arbre (40, 60, 90), et présentant une gorge (57, 77, 131) orientée radialement vers l'intérieur, dans laquelle est introduit un segment de piston (58, 78, 132) qui jouxte un prolongement annulaire (55a, 75a, 114) de l'élément d'étanchéité (54, 74, 122).

5. Dispositif selon une des revendications n° 1 ou n° 2, **caractérisé en ce que** la cavité (121) du joint hydraulique (120) est prévue dans la paroi (82) et que l'élément d'étanchéité (122) est disposé de façon co-rotative sur la face extérieure (111) de l'arbre (110).

6. Dispositif selon les revendications n° 2 et n° 5, **caractérisé en ce que** le dispositif d'étanchéité à l'arrêt comprend un disque annulaire relié à la paroi, et présentant une gorge orientée radialement vers l'intérieur, dans laquelle est introduit un segment de piston qui jouxte l'arbre.

7. Dispositif selon une des revendications n° 1 à n° 6, **caractérisé en ce que** le joint hydraulique (50, 70, 100, 120) est pourvu d'un dispositif de refroidissement.

8. Dispositif selon la revendication n° 7, **caractérisé en ce que** la cavité (51, 71, 101, 121) du joint hydraulique (50, 70, 100, 120) est reliée par au moins un canal (104, 123) à un conduit d'évacuation et/ou un espace (N1, N2) entre l'arbre (40, 60, 90, 110) et le carter (31, 81).

9. Dispositif selon une des revendications n° 1 à n° 8, **caractérisé en ce que** le premier joint hydraulique (50) et le deuxième joint hydraulique (70) présentent chacun un dispositif d'étanchéité à l'arrêt (45, 65) des côtés opposés à la paroi (32).

10. Dispositif selon une des revendications n° 1 à n° 8, **caractérisé en ce que** le deuxième joint hydraulique (120) est disposé à l'intérieur du premier joint hydraulique (100).

11. Dispositif selon la revendication n° 10, **caractérisé en ce que** le deuxième joint hydraulique (120) comprend une cavité (121) pour l'essentiel annulaire située dans l'élément d'étanchéité (102) du premier joint hydraulique (100) et qu'un élément d'étanchéité (122) pour l'essentiel annulaire du deuxième joint hydraulique (120) fait saillie dans la cavité (121) située dans l'élément d'étanchéité (102) du premier joint hydraulique (100).

12. Dispositif selon la revendication n° 11, **caractérisé en ce que** l'élément d'étanchéité (102) du premier joint hydraulique (100) est relié à la paroi (82) et que l'élément d'étanchéité (122) du deuxième joint hydraulique (120) est relié au deuxième arbre (110).

13. Dispositif selon une des revendications n° 11 et n° 12, **caractérisé en ce qu'**un deuxième canal (123) est disposé dans l'élément d'étanchéité (102) du premier joint hydraulique (100) et relie la cavité (121) du deuxième joint hydraulique (120) à la cavité (101) du premier joint hydraulique (100).

14. Dispositif selon une des revendications n° 10 à n° 13, **caractérisé en ce que** seul le premier joint hydraulique (100) présente un dispositif d'étanchéité à l'arrêt (125) du côté opposé à la paroi (82).

15. Dispositif selon une des revendications précédentes, **caractérisé en ce qu'**au moins un injecteur (59) est disposé sur le premier joint hydraulique (50).

16. Dispositif selon une des revendications n° 1 à n° 15, **caractérisé en ce qu'**au moins un deuxième injecteur (79, 133) est disposé sur le deuxième joint hydraulique (70, 120).

17. Dispositif selon une des revendications n° 10 à n° 16, **caractérisé en ce qu'**au moins un injecteur (133) est disposé sur seul le deuxième joint hydraulique (120).

18. Mise en oeuvre du dispositif selon une des revendications précédentes dans un réacteur destiné à l'aéronautique ou à l'astronautique, ou dans des installations chimiques ou de processus industriels.
